# EUROPEAN PATENT APPLICATION

(11) **EP 4 645 824 A1**
(43) Date of publication of application: **05.11.2025**
(21) Application number: 23915574.0
(22) Date of filing: 15.08.2023
(51) Int. Cl.: H04L 61/5076

(54) **METHOD FOR PROCESSING MEDIA ACCESS CONTROL ADDRESS, ELECTRONIC DEVICE, AND STORAGE MEDIUM**

(30) Priority: 09.01.2023 CN 202310025002
(71) Applicant: ZTE CORPORATION, Shenzhen, Guangdong 518057 (CN)
(72) Inventor: PAN, Tingshan, Shenzhen, Guangdong 518057 (CN)
(74) Representative: Ziebig Hengelhaupt Intellectual Property Attorneys Patentanwaltskanzlei PartGmbB
(86) International application number: PCT/CN2023/113112
(87) International publication number: WO 2024/148813

(57) **Abstract**

The present application relates to the technical field of communications, and discloses a method for processing a media access control address, an electronic device, and a storage medium. The method comprises: sending a first notification message to a second network device in the scenario in which a first dynamic media access control (MAC) address is not hit within a first period of time, the first notification message being used for notifying the second network device to process a second static MAC address, the second static MAC address and the first dynamic MAC address corresponding to the same target MAC address, a first network device and the second network device forming a multi-chassis link aggregation group (MC-LAG), the first period of time comprising a consecutive period of time after a current aging cycle of the first dynamic MAC address, and the duration of the first period of time being shorter than the duration of the current aging cycle.

## Description

### CROSS-REFERENCE TO RELATED APPLICATIONS

The present application claims priority to the Chinese patent application No. 202310025002.5 filed to the China Patent Office on January 9, 2023, and entitled "METHOD FOR PROCESSING MEDIA ACCESS CONTROL ADDRESS, ELECTRONIC DEVICE, AND STORAGE MEDIUM", the entire content of which is incorporated herein by reference.

### TECHNICAL FIELD

The present application belongs to the technical field of communications, and particularly relates to a method for processing a media access control address, an electronic device, and a storage medium.

### BACKGROUND

Multi-chassis link aggregation group (MC-LAG) technology is generally used in a dual-homing access scenario to virtualize two physical devices into one device for achieving multi-chassis link aggregation, thus providing device level redundancy protection and traffic load sharing.

The synchronization of media access control (MAC) addresses between two devices deploying MC-LAGs is performed through a peer-link. When dynamic MAC learned by one end is synchronized to a peer device, static MAC will be issued. However, if the static MAC is learned by the peer device from another port, the situation that the dynamic MAC drifts over the static MAC occurs. For static MAC drift, generally a central processing unit (CPU) overall determines local MAC updating based on MAC states of both local and remote ends in a message sending manner. However, in an MC-LAG scenario, when a switching chip detects that the dynamic MAC drifts over the static MAC, it sends all messages to the CPU for processing. This results in low CPU processing efficiency and long drift time.

### SUMMARY

The objectives of embodiments of the present application are to provide a method and apparatus for processing a media access control address, an electronic device, and a storage medium, which can control unnecessary static MAC drifting to be dynamic under an MC-LAG scenario, and improve the CPU processing efficiency during static MAC drift of MC-LAG devices.

To solve the above technical problems, the present application is implemented as follows.

In a first aspect, an embodiment of the present application provides a method for processing a media access control address. The method includes: sending a first notification message to a second network device in a case where a first dynamic media access control (MAC) address is not hit within a first period of time, wherein the first notification message is used for notifying the second network device to process a second static MAC address, the second static MAC address and the first dynamic MAC address correspond to the same target MAC address, and a first network device and the second network device form a multi-chassis link aggregation group (MC-LAG); and the first period of time includes a consecutive period of time after a current aging cycle of the first dynamic MAC address, and a duration of the first period of time is shorter than a duration of the current aging cycle; wherein processing the second static MAC address includes modifying a state of the second static MAC address from a static state to a dynamic state.

In a second aspect, an embodiment of the present application provides a method for processing a media access control address. The method includes: processing a second static MAC address in a case where a first notification message sent by a first network device is received, wherein the first notification message is sent in a case where a first dynamic MAC address of the first network device is not hit within a first period of time, the second static MAC address and the first dynamic MAC address correspond to the same target MAC address, and the first network device and a second network device form a multi-chassis link aggregation group (MC-LAG); and the first period of time includes a consecutive period of time after a current aging cycle of the first dynamic MAC address, and a duration of the first period of time is shorter than a duration of the current aging cycle; wherein processing the second static MAC address includes modifying a state of the second static MAC address from a static state to a dynamic state.

In a third aspect, an embodiment of the present application provides an electronic device. The electronic device includes a processor and a memory, the memory stores a program or instruction capable of running on the processor, and the program or instruction, when executed by the processor, implements the steps of the method for processing the media access control address described in the first aspect or the second aspect.

In a fourth aspect, an embodiment of the present application provides a readable storage medium. The readable storage medium stores a program or instruction thereon, and the program or instruction, when executed by a processor, implements the steps of the method for processing the media access control address described in the first aspect or the second aspect.

### BRIEF DESCRIPTION OF DRAWING(S)

FIG. 1 is a schematic flowchart of a method for processing a media access control address provided by an embodiment of the present application.
FIG. 2 is a schematic flowchart of another method for processing a media access control address provided by an embodiment of the present application.
FIG. 3 is a schematic flowchart of yet another method for processing a media access control address provided by an embodiment of the present application.
FIG. 4 is an example diagram of networking of a multi-chassis link aggregation group (MC-LAG) provided by an embodiment of the present application.
FIG. 5 is a schematic structural diagram of an apparatus for processing a media access control address provided by an embodiment of the present application.
FIG. 6 is a schematic structural diagram of an apparatus for processing a media access control address provided by an embodiment of the present application.
FIG. 7 is a schematic diagram of an electronic device provided by an embodiment of the present application.

### DETAILED DESCRIPTION

The technical solution in the embodiments of the present application will be clearly described below in combination with the accompanying drawings in the embodiments of the present application. Apparently, the described embodiments are part of the embodiments of the present application, not all of them. Based on the embodiments in the present application, all other embodiments obtained by those of ordinary skill in the art fall within the scope of protection of the present application.

In the specification and claims of the present application, the terms "first," "second" and so on are intended to distinguish similar objects, and are not used for describing a specific order or sequence. It is to be understood that such used data are interchangeable where appropriate so that the embodiments of the present application can be implemented in an order other than those illustrated or described here. The objects distinguished by "first," "second," etc. are usually of the same category, and the number of the objects is not limited. For example, there may be one or more first objects. In addition, in the specification and the claims, "and/or" represents at least one of connected objects, and the character "/" generally indicates an "or" relationship between associated objects.

Through specific embodiments and their application scenarios, a method for processing a media access control address, an electronic device, and a storage medium provided by the embodiments of the present application are described in details below in conjunction with the accompanying drawings.

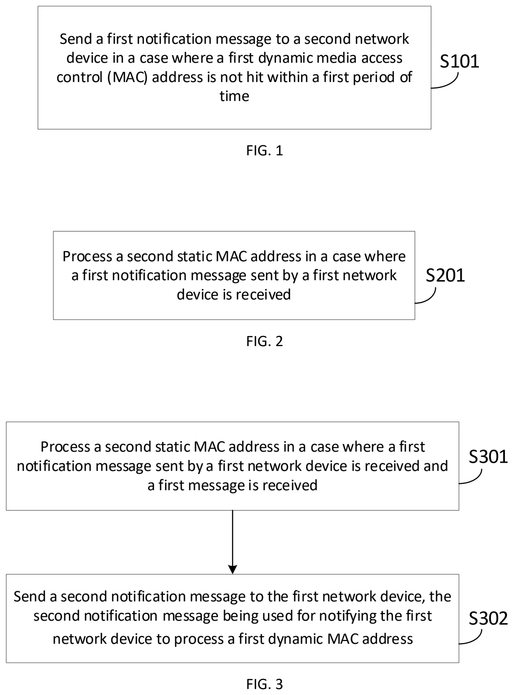

FIG. 1 is a schematic flowchart of a method for processing a media access control address provided by an embodiment of the present application. The method may be performed by a first network device, and the first network device includes, for example, a switch, a router and other devices. In other words, the method may be performed by software or hardware installed in the network device. As shown in FIG. 1, the method may include the following steps.

S101: a first notification message is sent to a second network device in a case where a first dynamic media access control (MAC) address is not hit within a first period of time.

The first notification message is used for notifying the second network device to process a second static MAC address, the second static MAC address and the first dynamic MAC address correspond to the same target MAC address, the first network device and the second network device form a multi-chassis link aggregation group (MC-LAG), the first period of time includes a consecutive period of time after a current aging cycle of the first dynamic MAC address, and a duration of the first period of time is shorter than a duration of the current aging cycle.

Processing the second static MAC address includes modifying a state of the second static MAC address from a static state to a dynamic state.

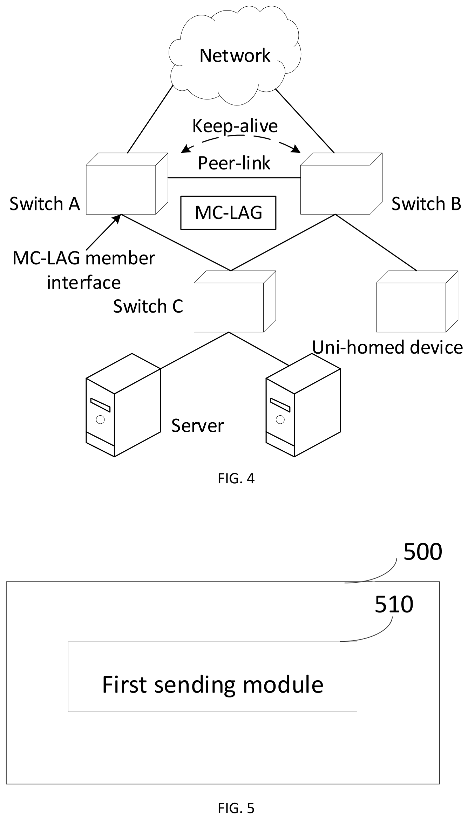

The first network device and the second network device form the multi-chassis link aggregation group (MC-LAG). As shown in FIG. 4, the first network device may be a switch A, and the second network device may be a switch B. The switches A and B are connected through a peer-link, which is a direct-connection link between the two devices deploying the MC-LAG, and the link supports an ordinary Ethernet interface and an aggregation interface, and is a layer-2 link. The two devices deploying the MC-LAG further communicate with each other through a keep-alive link, and the keep-alive link carries a keep-alive packet and is primarily used for MC-LAG negotiation, master/backup election, and dual-active detection. It is to be noted that, the keep-alive link and the peer-link are two different links with different functions. The keep-alive link may be carried by an external network, for example, the MC-LAG connects upstream to an Internet protocol (IP) network, and then two dual-homed devices may interconnect through the IP network, so that an interconnecting link may serve as the keep-alive link, or a layer-3 reachable link may be configured separately as the keep-alive link.

Therefore, as for the network and the access devices, the switches A and B are presented as a whole device to the outside, to achieve redundancy protection and load sharing. As shown in FIG. 4, a switch C is dual-homed through two MC-LAG member interfaces of the switches A and B respectively. The media access control (MAC) address is synchronized between the switches A and B, and when dynamic MAC learned by one end through the MC-LAG member interface is synchronized to a peer device, static MAC will be issued. However, if the MAC address is learned by the peer device again through the MC-LAG member interface, then the situation that the dynamic MAC drifts over the static MAC occurs. In relevant methods, generally a CPU overall determines local MAC updating based on MAC states of both local and remote ends in a message sending manner, namely to determine whether to drift.

However, when the situation that the dynamic MAC drifts over the static MAC occurs, a large amount of messages are sent to the CPU, which results in impacting of the CPU by the large amount of messages, the CPU may process hundreds or thousands of pieces of the same message information consecutively, the efficiency of the CPU for processing the dynamic MAC drifting over the static MAC is low, and a drift process is long.

Since the dynamic MAC address is obtained by an interface (the MC-LAG member interface) by learning a source MAC address in the message, an entry may be aged, and generally, the MAC address will be aged on hardware within 1-2 aging cycles: the first cycle expires, the hardware sets an age bit to 0, and if it is found that the MAC address still receives no source hit in the second cycle, the hardware will age out this MAC address.

In the embodiment of the present application, the first network device, namely one end of the dynamic MAC address, monitors an age bit inside a dynamic MAC address of an MC-LAG local device through the CPU, when the age bit is changed from 1 to 0, namely within a consecutive period of time after the current aging cycle of the first dynamic MAC address, at the moment, hardware will not be aged immediately, but the CPU performs regular polling (as long as a polling cycle is shorter than an aging cycle configured for the dynamic MAC address) to learn that the dynamic MAC at the local end is not hit by source MAC within this period of time, in this case, a message is sent to a peer MC-LAG to notify certain dynamic MAC at the peer end to reach a semi-aged state, thereby notifying the peer end to process a corresponding static MAC address, for example, the peer end allows only messages related to dynamic MAC drifting over static MAC for these specific static MAC addresses to be sent to the CPU, and thus this reduces unnecessary static-to-dynamic MAC drifting and improves CPU processing efficiency during static MAC drift of the MC-LAG devices.

It is assumed that MAC 100 exists, the MAC 100 is learned to the switch A through the MC-LAG member interface, MAC 200 is learned to the switch B through the MC-LAG member interface, the MAC which is learned at the same time is synchronized in a system, and final MAC entries of the switches A and B are as shown below:
Switch A: MAC 100 (dynamic) MAC 200 (static)
Switch B: MAC 100 (static) MAC 200 (dynamic)

In the present application, it is queried that the MAC 200 (dynamic) of the switch B has not been hit, after the aging cycle expires, it enters the semi-aged state, the CPU of the switch B sends a message to the switch A, notifying that the MAC 200 has entered the semi-aged state and requires the peer end to intervene. After receiving the message, the switch A sets a static MAC drift sending flag corresponding to the entry MAC 200 to 1. When a message with source MAC 200 enters the switch A through the MC-LAG member interface, the switch A detects that the MAC 200 exists but is static MAC, and the corresponding static MAC drift flag is 1, so the switch A modifies the MAC 200 from a static state to a dynamic state, thus completing drifting.

In the method for processing the media access control address provided by the embodiment of the present application, the first notification message is sent to the second network device in a case where the first dynamic media access control (MAC) address is not hit within the first period of time, the first notification message is used for notifying the second network device to process the second static MAC address, the second static MAC address and the first dynamic MAC address correspond to the same target MAC address, and the first network device and the second network device form the multi-chassis link aggregation group (MC-LAG). Processing the second static MAC address includes modifying the state of the second static MAC address from the static state to the dynamic state. Unnecessary static MAC drifting to be dynamic under an MC-LAG scenario can be controlled, and the CPU processing efficiency during static MAC drift of the MC-LAG devices can be improved.

In an implementation, after the first notification message is sent to the second network device, the method further includes: processing the first dynamic MAC address in a case where a second notification message sent by the second network device is received, wherein the second notification message is used for notifying the first network device to process the first dynamic MAC address. Processing the first dynamic MAC address includes modifying a state of the first dynamic MAC address from a dynamic state to a static state.

Specifically, after the state of the first static MAC address is modified from the static state to the dynamic state by the second network device, namely after drifting is completed, the state of the corresponding first dynamic MAC address is also modified from the dynamic state to the static state by the first network device, and therefore, instant network packet loss and flooding caused by aging of the dynamic MAC address in a case where two ends of the MC-LAG correspond to dynamic MAC are prevented. For example, in the aforementioned example, MAC 200 in the switch A drifts from the static state to the dynamic state, while MAC 200 in the switch B is modified from the dynamic state to the static state.

In an implementation, before the first notification message is sent to the second network device, the method further includes: querying at each interval of the first period of time whether the first dynamic MAC address is hit after the current aging cycle of the first dynamic MAC address expires; and taking a time when the first dynamic MAC address is hit as a starting time of a new aging cycle in a case where the first dynamic MAC address is hit within the first period of time.

In the embodiment of the present application, no instant aging is carried out after the aging cycle of the dynamic MAC expires, instead, whether the dynamic MAC is hit by source MAC is queried at each interval of the preset period of time, the next aging cycle is re-entered when the dynamic MAC is hit, the peer end is notified to allow only static MAC drift messages to be sent when the dynamic MAC is not hit, and therefore, instant network packet loss and flooding caused by aging of the dynamic MAC address can be avoided, meanwhile, unnecessary static MAC drifting to be dynamic under the MC-LAG scenario can be controlled, and the CPU processing efficiency during static MAC drift of the MC-LAG devices is improved.

FIG. 2 is a schematic flowchart of another method for processing a media access control address provided by an embodiment of the present application. The method may be performed by a second network device, and the second network device includes, for example, a switch, a router and other devices. In other words, the method may be performed by software or hardware installed in the network device. As shown in FIG. 2, the method may include the following steps.

S201: a second static MAC address is processed in a case where a first notification message sent by a first network device is received.

The first notification message is sent in a case where a first dynamic MAC address of the first network device is not hit within a first period of time, the second static MAC address and the first dynamic MAC address correspond to the same target MAC address, the first network device and the second network device form a multi-chassis link aggregation group (MC-LAG), the first period of time includes a consecutive period of time after a current aging cycle of the first dynamic MAC address, and a duration of the first period of time is shorter than a duration of the current aging cycle.

It is to be noted that, processing the second static MAC address includes modifying a state of the second static MAC address from a static state to a dynamic state.

Specifically, after the first notification message sent by the first network device is received, it can be learned that the first dynamic MAC address of the first network device is in a semi-aged state, the second network device allows only the static MAC address to drift to be dynamic for the second static MAC address corresponding to the first dynamic MAC address, for example, a static MAC drift sending flag corresponding to an entry MAC 200 is set to be 1, a message with source MAC 200 enters the switch A through the MC-LAG member interface, the switch A detects that the MAC 200 exists but is static MAC, and a corresponding static MAC drift flag is 1, so the switch A modifies the MAC 200 from a static state to a dynamic state, thus completing drifting.

In the method for processing the media access control address provided by the embodiment of the present application, the second static MAC address is processed in a case where the first notification message sent by the first network device is received, the first notification message is sent in a case where the first dynamic MAC address of the first network device is not hit within the first period of time, the second static MAC address and the first dynamic MAC address correspond to the same target MAC address, and the first network device and the second network device form the multi-chassis link aggregation group (MC-LAG). Processing the second static MAC address includes modifying the state of the second static MAC address from the static state to the dynamic state. Unnecessary static MAC drifting to be dynamic under an MC-LAG scenario can be controlled, and the CPU processing efficiency during static MAC drift of the MC-LAG devices can be improved.

FIG. 3 is a schematic flowchart of yet another method for processing a media access control address provided by an embodiment of the present application. The method may be performed by a second network device, and the second network device includes, for example, a switch, a router and other devices. In other words, the method may be performed by software or hardware installed in the network device. As shown in FIG. 3, the method may include the following steps.

S301: a second static MAC address is processed in a case where a first notification message sent by a first network device is received and a first message is received.

The first message is reported to a CPU of the second network device through an MC-LAG member interface, and a source MAC address corresponding to the first message is the same as the target MAC address.

Specifically, after the first notification message sent by the first network device is received and it is learned that a first dynamic MAC address of the first network device is in a semi-aged state, the second network device sends the drift message (first message) for the second static MAC address corresponding to the first dynamic MAC address, the static MAC is hit by source MAC of the first message, and then the static MAC is modified to be dynamic MAC, thus completing drifting.

S302: a second notification message is sent to the first network device.

The second notification message is used for notifying the first network device to process the first dynamic MAC address.

Specifically, after the second network device completes drifting of the second static MAC address, namely modifying from a static state to a dynamic state, the second notification message is sent to the first network device to instruct the first network device to modify a state of the corresponding first dynamic MAC address from a dynamic state to a static state, and therefore, instant network packet loss and flooding caused by aging of the dynamic MAC address in a case where both devices at the two ends of an MC-LAG correspond to dynamic MAC are prevented. For example, in the aforementioned example, MAC 200 in the switch A drifts from the static state to the dynamic state, while MAC 200 in the switch B is modified from the dynamic state to the static state.

In an implementation, the first message is obtained by sampling a plurality of second messages with a preset sampling rate, the second messages are reported to the CPU of the second network device through the MC-LAG member interface, and a source MAC address corresponding to each second message is the same as the target MAC address.

In an implementation, after the first notification message sent by the first network device is received, the method further includes: receiving the plurality of second messages reported to the CPU of the second network device.

Specifically, in the aforementioned embodiment, even though only sending of the drift message for the second static MAC address corresponding to the first dynamic MAC address is allowed, a large amount of repeated messages are still sent to the CPU at the same time, therefore, in the present embodiment, reporting is performed in a mirror-image sampling manner, for example, the sampling rate is 100:1, the number of the messages reported to the CPU is further reduced, and the processing burden of the CPU is decreased.

FIG. 5 is a schematic structural diagram of an apparatus for processing a media access control address provided by an embodiment of the present application. As shown in FIG. 5, the apparatus 500 includes: a first sending module 510.

The first sending module 510 is configured to send a first notification message to a second network device in a case where a first dynamic media access control (MAC) address is not hit within a first period of time. The first notification message is used for notifying the second network device to process a second static MAC address, the second static MAC address and the first dynamic MAC address correspond to the same target MAC address, and a first network device and the second network device form a multi-chassis link aggregation group (MC-LAG). Processing the second static MAC address includes modifying a state of the second static MAC address from a static state to a dynamic state.

In the apparatus for processing the media access control address provided by the embodiment of the present application, the first sending module is configured to send the first notification message to the second network device in a case where the first dynamic media access control (MAC) address is not hit within the first period of time, the first notification message is used for notifying the second network device to process the second static MAC address, the second static MAC address and the first dynamic MAC address correspond to the same target MAC address, and the first network device and the second network device form the multi-chassis link aggregation group (MC-LAG). Processing the second static MAC address includes modifying the state of the second static MAC address from the static state to the dynamic state. Unnecessary static MAC drifting to be dynamic under an MC-LAG scenario can be controlled, and the CPU processing efficiency during static MAC drift of MC-LAG devices can be improved.

In an implementation, the apparatus 500 further includes: a first processing module, configured to process the first dynamic MAC address in a case where a second notification message sent by the second network device is received. The second notification message is used for notifying the first network device to process the first dynamic MAC address. Processing the first dynamic MAC address includes modifying a state of the first dynamic MAC address from a dynamic state to a static state.

In an implementation, the apparatus 500 further includes: a polling module, configured to: query at each interval of the first period of time whether the first dynamic MAC address is hit after a current aging cycle of the first dynamic MAC address expires; and take a time when the first dynamic MAC address is hit as a starting time of a new aging cycle in a case where the first dynamic MAC address is hit within the first period of time.

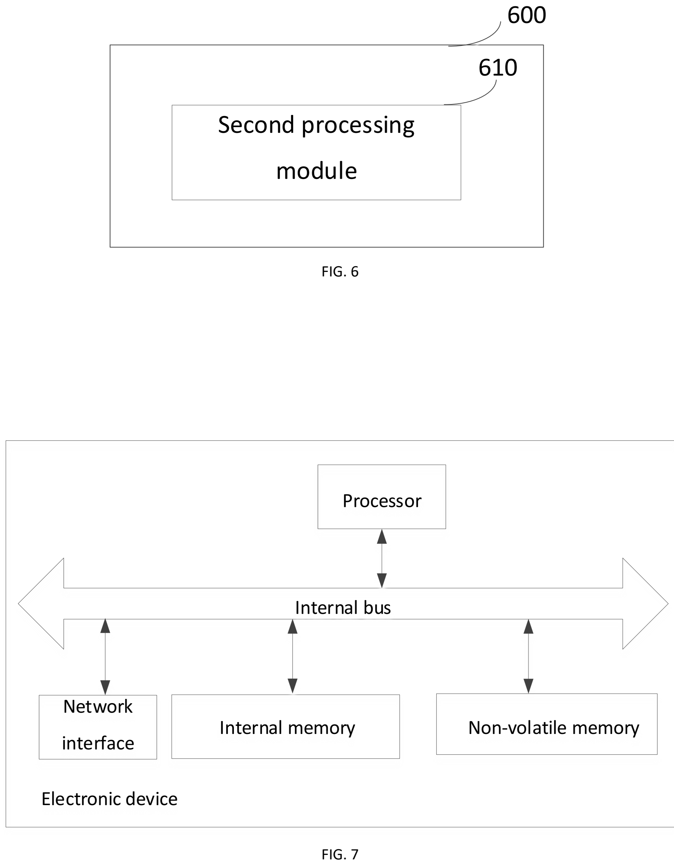

FIG. 6 is a schematic structural diagram of an apparatus for processing a media access control address provided by an embodiment of the present application. As shown in FIG. 6, the communication apparatus 600 includes: a second processing module 610.

The second processing module 610 is configured to process a second static MAC address in a case where a first notification message sent by a first network device is received. The first notification message is sent in a case where a first dynamic MAC address of the first network device is not hit within a first period of time, the second static MAC address and the first dynamic MAC address correspond to the same target MAC address, and the first network device and a second network device form a multi-chassis link aggregation group (MC-LAG). Processing the second static MAC address includes modifying a state of the second static MAC address from a static state to a dynamic state.

In the apparatus for processing the media access control address provided by the embodiment of the present application, the second processing module is configured to process the second static MAC address in a case where the first notification message sent by the first network device is received, the first notification message is sent in a case where the first dynamic MAC address of the first network device is not hit within the first period of time, the second static MAC address and the first dynamic MAC address correspond to the same target MAC address, and the first network device and the second network device form the multi-chassis link aggregation group (MC-LAG). Processing the second static MAC address includes modifying the state of the second static MAC address from the static state to the dynamic state. Unnecessary static MAC drifting to be dynamic under an MC-LAG scenario can be controlled, and the CPU processing efficiency during static MAC drift of MC-LAG devices can be improved.

In an implementation, the second processing module 610 is configured to: process the second static MAC address in a case where the first notification message sent by the first network device is received and a first message is received. The first message is reported to a CPU of the second network device through an MC-LAG member interface, and a source MAC address corresponding to the first message is the same as the target MAC address.

In an implementation, the first message is obtained by sampling a plurality of second messages with a preset sampling rate, the second messages are reported to the CPU of the second network device through the MC-LAG member interface, and a source MAC address corresponding to each second message is the same as the target MAC address.

In an implementation, the apparatus 600 further includes: a receiving module, configured to receive the plurality of second messages reported to the CPU of the second network device.

In an implementation, the apparatus 600 further includes: a second sending module, configured to send a second notification message to the first network device. The second notification message is used for notifying the first network device to process the first dynamic MAC address, wherein processing the first dynamic MAC address includes modifying a state of the first dynamic MAC address from a dynamic state to a static state.

FIG. 7 shows a schematic diagram of a hardware structure of an electronic device for executing the processing of a media access control address provided by an embodiment of the present application. Referring to the figure, at a hardware level, the electronic device includes a processor, optionally an internal bus, a network interface, and a memory. The memory may include an internal memory such as a high-speed random-access memory (RAM), or a non-volatile memory such as at least one disk memory. Of course, the electronic device may also include hardware required for other services.

The processor, the network interface, and the memory may be interconnected by the internal bus, which may be an industry standard architecture (ISA) bus, a peripheral component interconnect (PCI) bus, or an extended industry standard architecture (EISA) bus, among others. The bus may be divided into an address bus, a data bus, a control bus, and the like. For ease of illustration, only one bi-directional arrow is shown in the figure, but it does not indicate only one bus or one type of bus.

The memory is configured to store a program. Specifically, the program may include a program code, and the program code includes computer operating instructions. The memory may include an internal memory and a non-volatile memory, and provides instructions and data to the processor.

The processor reads a corresponding computer program from the non-volatile memory into the internal memory and then runs the computer program to form an apparatus for locating a target user at a logical level. The processor executes the program stored in the memory, and is specifically configured to perform the method for processing the media access control address in any one of FIGS. 1-3 in the aforementioned method embodiments, and achieve the functions and beneficial effects of the method for processing the media access control address in any one of FIGS. 1-3 in the aforementioned method embodiments, which is omitted here.

The above method for processing the media access control address disclosed in any of the embodiments in FIGS. 1-3 of the present application may be applied to the processor or implemented by the processor. The processor may be an integrated circuit chip having signal processing capabilities. During an implementation process, all the steps of the above method may be completed by an integrated logic circuit of hardware or an instruction in the form of software in the processor. The above processor may be a general-purpose processor, including a central processing unit (CPU), a network processor (NP) and the like. The processor may also be a digital signal processor (DSP), an application specific integrated circuit (ASIC), a fieldprogrammable gate array (FPGA) or other programmable logic devices, discrete gate or transistor logic devices, and discrete hardware components. The various methods, steps, and logic block diagrams disclosed in the embodiments of the present application may be implemented or performed. The general-purpose processor may be a microprocessor, or the processor may also be any conventional processor, etc. The steps of the method disclosed in conjunction with the embodiments of the present application may be directly embodied to be performed and completed by a hardware decoding processor, or may be performed and completed through a combination of hardware and software modules in the decoding processor. The software modules may be located in a mature storage medium in the art, such as a random access memory, a flash memory, a read-only memory, a programmable read-only memory, an electrically erasable programmable memory, and a register. The storage medium is located in the memory. The processor reads information in the memory and completes the steps of the above method in combination with hardware thereof.

The electronic device may further perform the method for processing the media access control address in any one of FIGS. 1-3 in the aforementioned method embodiments, and achieve the functions and beneficial effects of the method for processing the media access control address in any one of FIGS. 1-3 in the aforementioned method embodiments, which is omitted here.

Of course, in addition to the software implementations, the electronic device of the present application does not exclude other implementations, such as logic devices or combinations of software and hardware, that is, an execution body of the following processing flows is not limited to each logic unit, but may also be hardware or a logic device.

An embodiment of the present application further proposes a computer-readable storage medium. The computer-readable storage medium stores one or more programs that, when executed by an electronic device including a plurality of application programs, cause the electronic device to perform the method for processing the media access control address in any one of FIGS. 1-3 in the aforementioned method embodiments, and achieve the functions and beneficial effects of the method for processing the media access control address in any one of FIGS. 1-3 in the aforementioned method embodiments, which is omitted here.

The computer-readable storage medium includes a read-only memory (ROM), a random access memory (RAM), a magnetic disk or an optical disk, etc.

Further, an embodiment of the present application further provides a computer program product. The computer program product includes a computer program stored on a nontransitory computer-readable storage medium, the computer program includes program instructions, and the program instructions, when executed by a computer, implement the functions and beneficial effects of the method for processing the media access control address in any one of FIGS. 1-3 in the aforementioned method embodiments, which is omitted here.

In total, the above is merely preferred embodiments of the present application and is not intended to limit the scope of protection of the present application. Any modifications, equivalent replacements, improvements, etc. made within the spirit and principle of the present application shall fall within the scope of protection of the present application.

The system, apparatus, module or unit illustrated in the above embodiments may be specifically implemented by a computer chip or entity, or by a product having a certain function. A typical implementation device is a computer. In particular, the computer may be, for example, a personal computer, a laptop computer, a cellular phone, a camera phone, a smart phone, a personal digital assistant, a media player, a navigation device, an email device, a game console, a tablet computer, a wearable device, or a combination of any of these devices.

The computer-readable medium includes permanent and non-permanent, and removable and non-removable media, and may achieve information storage through any method or technology. The information may be computer-readable instructions, data structures, modules of programs, or other data. Examples of the computer storage medium include but are not limited to a phasechange memory (PRAM), a static RAM (SRAM), a dynamic RAM (DRAM), other types of random access memories (RAMs), a read-only memory (ROM), an electrically erasable programmable ROM (EEPROM), a flash memory or other memory technologies, a compact disc ROM (CD-ROM), a digital video disk (DVD) or other optical storage and magnetic cassette tape, magnetic-tape magnetic-disk storage or other magnetic storage devices or any other non-transmission media, and may be configured to store information that can be accessed by a computing device. According to the definition herein, the computer-readable medium does not include transitory media, such as modulated data signals and carriers.

It should be noted that, herein, the terms "include," "comprise" or any other variants thereof are intended to cover non-exclusive inclusion, so that a process, method, article or apparatus including a series of elements not only includes those elements, but also includes other elements not clearly listed, or also includes elements inherent to such process, method, article or apparatus. Without further restrictions, the elements defined by the sentence "including a..." do not exclude that there are other same elements in the process, method, article or apparatus including the elements. In addition, it should be noted that the scope of the methods and apparatuses in the implementations of the present application is not limited to performing functions in the order shown or discussed, and may also include performing functions in a substantially simultaneous manner or in the opposite order according to the functions involved. For example, the described method may be performed in a different order than described, and various steps may also be added, omitted, or combined. Additionally, the features described with reference to certain examples can be combined in other examples.

Through the description of the above implementations, those skilled in the art can clearly understand that the method in the above embodiments can be implemented through software and necessary general hardware platforms. Of course, the method may also be implemented through hardware, but in many cases, the former is the better implementation. Based on such understandings, the technical solution of the present application can be embodied in the form of a computer software product essentially or on the part of contributions to the prior art. The computer software product is stored in one storage medium, such as a ROM/RAM, a magnetic disk and an optical disk, and includes a plurality of instructions used for causing a terminal (a mobile phone, a computer, a server or a network device, etc.) to perform the methods described in various embodiments of the present application.

The embodiments of the present application have been described above in conjunction with the accompanying drawings, but the present application is not limited to the specific implementations described above. The specific implementations described above are only illustrative and not restrictive. Under the guidance of the present application, a person of ordinary skill in the art can further make many forms without departing from the spirit of the present application and scope of protection of the claims, all of which shall fall within the protection of the present application.

## Claims

1. A method for processing a media access control address, performed by a first network device, wherein the method comprises:
sending a first notification message to a second network device in a case where a first dynamic media access control (MAC) address is not hit within a first period of time, wherein the first notification message is used for notifying the second network device to process a second static MAC address, the second static MAC address and the first dynamic MAC address correspond to a same target MAC address, the first network device and the second network device form a multi-chassis link aggregation group (MC-LAG), the first period of time comprises a consecutive period of time after a current aging cycle of the first dynamic MAC address, and a duration of the first period of time is shorter than a duration of the current aging cycle; wherein
processing the second static MAC address comprises modifying a state of the second static MAC address from a static state to a dynamic state.

2. The method according to claim 1, wherein after the first notification message is sent to the second network device, the method further comprises:
processing the first dynamic MAC address in a case where a second notification message sent by the second network device is received, wherein the second notification message is used for notifying the first network device to process the first dynamic MAC address; wherein
processing the first dynamic MAC address comprises modifying a state of the first dynamic MAC address from a dynamic state to a static state.

3. The method according to claim 1, wherein before the first notification message is sent to the second network device, the method further comprises:
querying at each interval of the first period of time whether the first dynamic MAC address is hit after the current aging cycle of the first dynamic MAC address expires; and
taking a time when the first dynamic MAC address is hit as a starting time of a new aging cycle in a case where the first dynamic MAC address is hit within the first period of time.

4. A method for processing a media access control address, performed by a second network device, comprising:
processing a second static MAC address in a case where a first notification message sent by a first network device is received, wherein the first notification message is sent in a case where a first dynamic MAC address of the first network device is not hit within a first period of time, the second static MAC address and the first dynamic MAC address correspond to a same target MAC address, the first network device and the second network device form a multi-chassis link aggregation group (MC-LAG), the first period of time comprises a consecutive period of time after a current aging cycle of the first dynamic MAC address, and a duration of the first period of time is shorter than a duration of the current aging cycle; wherein
processing the second static MAC address comprises modifying a state of the second static MAC address from a static state to a dynamic state.

5. The method according to claim 4, wherein processing the second static MAC address in a case where the first notification message sent by the first network device is received comprises:
processing the second static MAC address in a case where the first notification message sent by the first network device is received and a first message is received, wherein the first message is reported to a CPU of the second network device through an MC-LAG member interface, and a source MAC address corresponding to the first message is the same as the target MAC address.

6. The method according to claim 5, wherein the first message is obtained by sampling a plurality of second messages with a preset sampling rate, the second messages are reported to the CPU of the second network device through the MC-LAG member interface, and a source MAC address corresponding to each second message is the same as the target MAC address.

7. The method according to claim 6, wherein after the first notification message sent by the first network device is received, the method further comprises:
receiving the plurality of second messages reported to the CPU of the second network device.

8. The method according to claim 4, wherein after processing the second static MAC address, the method further comprises:
sending a second notification message to the first network device, the second notification message being used for notifying the first network device to process the first dynamic MAC address, wherein processing the first dynamic MAC address comprises modifying a state of the first dynamic MAC address from a dynamic state to a static state.

9. An electronic device, comprising a processor, a memory and a program or instruction stored on the memory and capable of running on the processor, wherein the program or instruction, when executed by the processor, implements the steps of the method according to any one of claims 1 to 8.

10. A readable storage medium, storing a program or instruction thereon, wherein the program or instruction, when executed by a processor, implements the steps of the method according to any one of claims 1 to 8.
